# NEUE EUROPÄISCHE PATENTSCHRIFT

(11) **EP 1 718 450 B2**
(45) Veröffentlichungstag und Bekanntmachung des Hinweises auf die Entscheidung über den Einspruch: **25.03.2020**
(45) Hinweis auf die Patenterteilung: 09.01.2013
(21) Anmeldenummer: 05706696.1
(22) Anmeldetag: 25.01.2005
(51) Int. Cl.: B82Y 30/00, B29C 44/00, B29C 44/34, C08J 9/00, C08J 9/16

(54) **VERFAHREN ZUR HERSTELLUNG VON MIKROPORÖSEN KUNSTSTOFFPRODUKTEN**
METHOD FOR PRODUCING MICROPOROUS SYNTHETIC ARTICLES
PROCEDE POUR L'OBTENTION DE PRODUITS MICROPOREUX A BASE DE MATIERE PLASTIQUE

(30) Priorität: 27.01.2004 DE 102004004237
(43) Veröffentlichungstag der Anmeldung: 08.11.2006
(73) Patentinhaber: WOCO Industrietechnik GmbH, 63628 Bad Soden-Salmünster (DE)
(72) Erfinder: MENGES, Georg, 52072 Aachen (DE); WOLF, Bernhard, 63628 Bad Soden-Salmünster (DE)
(74) Vertreter: Schmid, Nils T.F.
(86) Internationale Anmeldenummer: PCT/DE2005/000100
(87) Internationale Veröffentlichungsnummer: WO 2005/070645

(56) Entgegenhaltungen:
- WO-A1-00/37242
- DE-A1- 10 229 983
- US-A1- 2002 128 336
- US-A1- 2002 171 164

## Beschreibung

Die vorliegende Erfindung betrifft ein Verfahren zur Herstellung von mikroporösen Kunststoffprodukten gemäß Anspruch 1.

Der Anteil an Kunststoffbauteilen im Automobil nimmt ständig zu. Insbesondere im Innenraum sowie in der Karosserie kommen verstärkt Kunststoffbauteile zum Einsatz und ersetzen vielfach wesentlich schwerere Materialien. Kunststoffbauteile reduzieren somit das Gesamtgewicht von Fahrzeugen, sind zudem korrosionsbeständig und zumeist auch leicht zu verarbeiten. Zahlreiche Kunststoffanwendungen finden sich ebenfalls bereits im Bereich des Motorraums verwirklicht.

Ersetzt man z.B, herkömmliche thermoplastische Spritzgussbauteile durch geschäumte Kunststoffe, kann eine noch weitergehende Gewichtsreduzierung erzielt werden. Die Bedeutung geschäumter Kunststoffe nimmt daher nicht nur im Automobilbau stetig zu. Wie bei herkömmlichen thermoplastischen Bauteilen werden auch an geschäumte Kunststoffbauteile hohe Anforderungen an die Festigkeit gestellt.

Für die Herstellung geschäumter Spritzgussbauteile wird heutzutage häufig auf das sogenannte MuCell-Verfahren zurückgegriffen. Bei diesem Verfahren wird das zu schäumende thermoplastische Material in einem Mischschneckenextruder plastifiziert, und ein Schäummittel wird bei einer Temperatur und einem Druck, bei dem dieses ein überkritisches Fluid ist, in den Mischschneckenextruder eingeführt. In einer Diffusionskammer wird sodann eine vollständig einphasige Lösung aus dem plastifizierten Material und dem überkritischen Fluid gebildet. Durch Ändern der Temperatur und des Druckes stromabwärts der Mischschnecke wird das Schäummittel freigesetzt und es bildet sich ein supramikrozelluläres geschäumtes Kunststoffmaterial, das sich durch eine sehr feinteilige und gleichmäßige Porenstruktur auszeichnet. Ein derartiges Verfahren findet sich z.B. in der WO 92/17533 beschrieben.

In der DE 697 17 465 T2 wird ein Verfahren offenbart, mit dem versucht werden soll, Unzulänglichkeiten des MuCell-Verfahrens abzustellen. Zu diesem Zweck wird das Treibmittel in den Strom aus schmelzeflüssigem polymeren Material durch eine Vielzahl an Öffnungen entlang der Extruderzylinder eingebracht, um eine besonders homogene Einphasenlösung aus polymerem Schmelzematerial und Treibmittel zu erhalten.

Zur Erhöhung der Festigkeit geschäumter Materialien offenbart die WO 02/26482 einen nach dem MuCell-Verfahren hergestellten mikrozellulären geschäumten Formkörper, in den Fasern, insbesondere Glasfasern, mit einer Länge von mindestens 0,55 mm eingearbeitet sind. Durch den Einsatz eines superkritischen Fluids als Treibmittel soll eine besonders schonende Einarbeitung der Glasfasern in den Formkörper gelingen, so dass die Länge der eingesetzten Fasern bei der Einarbeitung nicht wesentlich verringert wird. Gemäß der WO 02/26482 werden geschäumte mikrozelluläre Formkörper mit durchschnittlichen Zellengrößen kleiner 100 µm erhalten.

Anders als bei dem MuCell-Verfahren, mit dem geschlossenporige geschäumte Formkörper zugänglich sind, zeigt die DE 100 05 873 A1 einen Weg auf, um zu offenzelligen Systemen zu gelangen. Um ein besonders hohes Maß an Offenzelligkeit in extrudierten Schaumstrukturen zu bewerkstelligen, kann gemäß der DE 100 05 873 A1 auf Kohlendioxid oder Stickstoff als Treibmittel in Kombination mit z.B. Kohlenstoffpartikeln als Keimbildner zurückgegriffen werden. Auf diese Weise erhält man Schaumstoffplatten mit ausreichender Wärmeformbeständigkeit.

Da die mechanischen Eigenschaften geschäumter Formteile sich regelmäßig bei Verwendung kleinerer Zellengrößen verbessern lassen, hat die DE 101 42 349 A1 das MuCell-Verfahren dahingehend modifiziert, dass der Thermoplastschmelze ein Silikonöl oder ein vernetzter Kautschuk mit einer Partikelgröße kleiner 1 µm als Zusatzstoff beigegeben wird. Auf diese Weise sind geschäumte Thermoplaste mit Zellengrößen im Bereich von 5 bis 150 µm zugänglich.

US 2002171164 A1 offenbart ein Verfahren zur Herstellung eines geschäumten Formteils, Profils oder Granulats unter Verwendung von polymerem Ausgangsmaterial und Nanopartikeln.

Auch bereits bei S. Schäper, Dissertation "Nukleierung thermodynamisch getriebener Polyurethan-Reaktionsschäume", RWTH Aachen, 1977, wird der Einfluss ausgewählter Nukleierungshilfsmittel auf die Bildung geschäumter Kunststoffformteile beschrieben. Es wurde gefunden, dass sowohl Aktivkohle mit an ihrer Oberfläche absorbierter Luft als auch pulverförmiges Polytetrafluorethylen (PTFE) nicht zu einer nachweislich verbesserten Blasenbildung bzw. Schaumstruktur beitragen konnten.

Ferner offenbart die WO00/37242A1 Strukturschaum-Komposit mit einer Nanopartikel Verstärkung und ein Herstellungsverfahren dafür. Der Strukturschaumartikel ist dazu geeignet in ein Anbauteil eines Automobils eingespritzt zu werden und umfasst zumindest einen Thermoplasten, Verstärkungspartikeln und zumindest ein Treibmittel.

Bei den nach den Verfahren des Stands der Technik erhaltenen ungeschäumten und geschäumten Formteilen wird beim Herstellungsprozess noch stets Schwindung beobachtet, weshalb bei der Formgebung üblicherweise auf Nachdruck nicht verzichtet werden kann. Als weiterer Nachteil, insbesondere bei der Fertigung von Karosserieinnenbauteilen, wird auch noch häufig Verzug festgestellt. Ein großes Manko geschäumter Kunststoffformkörper stellt bislang deren optisch wenig ansprechende, da sehr raue Oberfläche dar, weshalb im Stand der Technik in der Regel folienbeschichtete Bauteile zum Einsatz kommen. Zur Optimierung der Oberfläche von geschäumten Formteilen sind darüber hinaus bereits vielfältige Maßnahmen vorgeschlagen worden. Beispielsweise kann bei der Befüllung des Formwerkzeuges mit der Polymerschmelze ein so genanntes Gasgegendruckverfahren zur Anwendung kommen, bei dem der Druck vor der Fliessfront über einen kritischen Druck hinaus erhöht wird. Auf diese Weise kann die Blasenbildung an der Fliessfrontoberfläche unterdrückt werden. Allerdings hat sich gezeigt, dass dieses Verfahren sich nur für dickwandige Bauteile eignet, da die Blasenbildung nicht nur an der Oberfläche selber, sondern zumeist in der gesamten vorderen Schicht des geschäumten Formteiles zurückgedrängt wird. Des weiteren kann zur Optimierung der Oberfläche nach einem Zweikomponentenverfahren gearbeitet werden, bei dem zunächst eine erste Schmelze über einen Anguss in das Formwerkzeug eingeführt wird, die blasenfrei ist, also z.B. kein Treibmittel enthält. Unmittelbar folgend wird eine zweite Schmelze in das Formwerkzeug eingebracht, die mit einem geeigneten Treibmittel versetzt ist. Da in der Schmelze gelöste Gase deren Viskosität in der Regel relativ stark herabsetzen, sind bei diesem Verfahren besondere Vorkehrungen zu treffen, dass die zum Einsatz kommenden unterschiedlichen Schmelzekomponenten insbesondere in ihrem Fliessverhalten aufeinander abgestimmt sind. Allerdings kann bei diesem Verfahren bedingt durch die Entgasung der Kernschmelze eine Lunkerbildung zwischen den beiden Schmelzephasen unterschiedlicher Konsistenz nicht vollständig ausgeschlossen werden.

Es wäre somit wünschenswert, ein Verfahren zur Herstellung von Formteilen zur Hand zu haben, das nicht mit den Nachteilen des Stands der Technik behaftet ist. Der vorliegenden Erfindung lag daher die Aufgabe zugrunde, ein Verfahren zur Herstellung geschäumter Kunststoffformteile zugänglich zu machen, mit dem Bauteile mit geringer oder keiner Schwindung sowie mit geringem oder vernachlässigbarem Verzug zugänglich sind, die eine sehr gute Schall- und Erschütterungsdämpfung aufweisen und die sich zudem durch eine optisch ansprechende Oberfläche auszeichnen, ohne dabei auf zusätzliche Maßnahmen oder Materialien angewiesen zu sein.

Die der Erfindung zugrundeliegende Aufgabe wurde gelöst durch ein Verfahren gemäß den Merkmalen des Patentanspruchs 1.

Das erfindungsgemäße Verfahren nach Patentanspruch 1 lässt sich grundsätzlich auf allen Spritzgieß- und Extrusionsvorrichtungen oder Pressanlagen ausführen, mit denen geschäumte Kunststoffmaterialien nach herkömmlichem Verfahren zugänglich sind. Dieses trifft insbesondere auch auf Verarbeitungsmaschinen zu, wie sie regelmäßig für die Durchführung des MuCell-Verfahrens, z.B. gemäß der DE 692 32 415 T2, zum Einsatz kommen. Demgemäß stellt das erfindungsgemäße Verfahren gemäß einer Ausführungsform auch eine Weiterentwicklung des MuCell-Verfahrens dar, ist jedoch nicht hierauf beschränkt, sondern kann grundsätzlich bei allen Herstellverfahren für geschäumte Kunststofffonuelle implementiert werden. Grundsätzlich ist bei dem vorliegenden erfindungsgemäßen Verfahren sicherzustellen, dass ein zumindest in der Plastifiziereinheit fliessfähiges Material zum Einsatz kommt, das zumindest in Teilen das Zweiphasensystem flüssig/gasförmig umfasst und eine durchgehende Flüssigphase aufweist, wobei dieses Material bei Temperaturerniedrigung in der Lage ist, seine Fliessfähigkeit wieder zu verlieren. Bei Kautschuken und anderen duromeren Werkstoffen kann das Matrixmaterial hingegen bei Wärmezuführung oberhalb kritischer Temperaturen vernetzen und damit seine Fließfähigkeit verlieren,

Zudem ist dafür Sorge zu tragen, dass die Aufbereitung und Vermengung der einzelnen Komponenten in der Weise durchgeführt wird, dass allenfalls eine mäßige, insbesondere jedoch keine Haftung zwischen dem Kunststoffausgangsmaterial und den Nanopartikeln resultiert. Je schlechter die Haftung zwischen diesen beiden Komponenten ist, um so vorteilhafter gestaltet sich die Bildung einer gleichmäßigen feinporigen Schaumstruktur. Denn je unvollständiger die Benetzung zwischen der Polymerschmelze und den Nanopartikeln ist, um so eher setzt in der Regel die Keimbildung ein. Besonders bevorzugt sind z.B. solche Systeme aus Kunststoffschmelze und Nanopartikeln, bei denen ein Benetzungswinkel kleiner 30° resultiert.

In einer besonders zweckmäßigen Ausgestaltung des erfindungsgemäßen Verfahrens werden Nanopartikel mit einer engen Korngrößenverteilung eingesetzt. Auf diese Weise wird eine besonders gleichmäßige Schaumstruktur mit einer großen Zahl an sehr kleinen Poren erhalten.

Besonders zufriedenstellende Resultate, insbesondere im Hinblick auf optisch einwandfrei Oberflächen, lassen sich dann erhalten, wenn der Nanopartikel vor der Einbringung in eine Polymerschmelze, enthaltend das polymere Ausgangsmaterial, in der Plastifiziereinheit oder dem Mischaggregat mit einem Anti-Haftmittel vorbehandelt wird. Geeignete Anti-Haftmittel sind z.B. Fette oder Substanzen mit verwandten Eigenschaften. Alternativ kann zusätzlich zu den Anti-Haftmitteln oder anstelle dieser Anti-Haftmittel bei der Herstellung der Nanopartikeln darauf verzichtet werden, diese mit Haftvermittlern zu benetzen. Ein geeignetes Verfahren zur Herstellung solcher Nanopartikel ist z.B, ohne weiteres in Anlehnung an die in der Encyclopedia of Polymer Science and Engineering, 2. Auflage, Vol. 4, Seiten 284 bis 298, zu konzipieren, indem man die dort vorgesehenen Haftvermittler auf der jeweiligen Verfahrensstufe weglässt, Ferner kann man gemäß einer weiteren Ausführungsform die Polarität der Polymerwerkstoffe und der Treibmittel aufeinander abstimmen, um die vorangehend beschriebenen Haftungsphänomene zu unterdrücken. Beispielsweise kann gemäß einer bevorzugten Ausführungsform bei unpolaren Polymerwerkstoffen, wie z.B. Polyolefinen, auf Wasser als Treibmittel zurückgegriffen werden. Sollen hingegen polare Polymerwerkstoffe geschäumt werden, z.B. Polyamide, Polyester, Polyurethane oder Polyether, empfiehlt sich die Verwendung eines unpolaren Treibmittels, z.B. von superkritischem Stickstoff oder superkritischem Kohlendioxid. Vorzugsweise werden auch die Nanopartikel jeweils mit den entsprechenden Treibmitteln vorbehandelt. Selbstverständlich ist es zusätzlich oder gleichzeitig möglich, als Anit-Haftmittel Verbindungen einzusetzen, die sich in ihrem polaren bzw. unpolaren Charakter stark von der polaren bzw. unpolaren Natur der Nanopartikel oder Nanopartikelvorstufenmaterialien unterscheiden. Liegen z.B. polare Nanopartikel oder Nanopartikelvorstufenmaterialien vor, wird bevorzugt als Anti-Haftmittel eine unpolare Substanz eingesetzt. Das Gleiche gilt umgekehrt für unpolare Nanopartikel.

Als polymeres Kunststoffausgangsmaterial kommen z.B. thermoplastische Polymere und thermoplastische Elastomere, jeweils vorzugsweise in Granulatform, in Betracht. Geeignete thermoplastische Polymere können z.B. ausgewählt werden aus der Gruppe, bestehend aus ASA-Polymerisaten, ABS-Polymerisaten, Polycarbonaten, Polyestern, Polyamiden, Polyenthern, Polyimiden, Polystyrolen, Polyurethanen, Polyelherketonen, Polyphenylensulfiden, Polyphenylenethem Poly(meth)acrylaten, Poly(meth)acrylamiden, Poly(meth)acrylnitril, Polysulfonen, Polyvinylchloriden, SAN-Polymerisaten, Epoxyharzen, Phenolharzpolymeren, jeweils in schlagzähmodifizierter und nicht schlagzähmodifizierter Form, sowie deren Mischungen. Thermoplastische Kunststoff sowie deren Herstellung sind dem Fachmann im allgemeinen bekannt,

Als thermoplastische Elastomere kommen z.B. die dem Fachmann bekannten S-BB-S-, SBS-SIS-, EPDM/PP-, Polyamid-, Polyester- oder TPU-Systeme in Frage.

Unter Nanopartikel sollen vorliegend Partikel mit einer Größe im Nanometerbereich verstanden werden, d.h. im Bereich von etwa 0,5 x 10⁻⁹ bis 10⁻⁶ m. Materialien mit einer größeren Partikelgröße werden im allgemeinen im Sinne der vorliegenden Erfindung als Nanopartikelvorstufenmaterialien bezeichnet, wobei auch diese Vorstufenmaterialien in Größen kleiner 10⁻⁶ m vorliegen können.

Als Nanopartikel kommen insbesondere auch solche, die aus Nanopartikelvorstufenmaterialien in delaminierter bzw. exfolierter Form zugänglich sind, in Betracht. Hierbei wird insbesondere zurückgegriffen auf Montmorillonit, Smectit, Ellit, Sepiolit, Palygorskit, Muscovit, Allivardit, Amesit, Hectorit, Fluorhectorit, Saponit, Beidellit, Talkum, Noutronit, Stevensit, Bentonit, Glimmer, Vermiculit, Fluorvermiculit, Halloysit und fluorenthaltende synthetische Talkum-Typen sowie deren Mischungen. Unter exfolierten Nanopartikeln bzw. delaminierten Schichtsilikaten im Sinne der vorliegenden Erfindung sollen z.B. solche Substanzen verstanden werden, bei welchen durch Umsetzung mit sogenannten Hydrophobierungsmitteln mit gegebenenfalls anschließender Quellung, z.B. durch Zugabe von Monomeren wie Caprolactam, die Schichtabstände zunächst vergrößert werden. Ferner sind auch über das Sol/Gelverfahren erhältliche Siliziumverbindungen geeignet.

Hierbei ist von Vorteil, wenn die durchschnittliche Länge und/oder Breite der eingesetzten Nanopartikel im Bereich von 10 bis 700 nm, insbesondere im Bereich von 20 bis 500, vorzugsweise 250, nm, und die durchschnittliche Dicke bzw. der Radius dieser Nanopartikel im Bereich von 1 bis 250 nm, bevorzugt von 1 bis 80 nm, besonders bevorzugt von 1 bis 50 nm und insbesondere von 1 bis 10 nm, liegt.

Bevorzugt lassen sich Nanopartikelvorstufenmaterialien mittels Scherung in einer Plastifiziereinheit in geeignete Nanopartikel zerteilen und/oder defolieren.

Grundsätzlich kann auf chemische wie physikalische Treibmittel oder auf Mischungen beider Treibmitteltypen zurückgegriffen werden. Als geeignete chemische Treibmittel kommen z.B. Azo- und Diazoverbindungen, insbesondere Azodicarbonsäurediamid, Sulfohydrazide, Semicarbazide, Zitronensäure und deren Ester, Peroxo-, Triazin-Tetrazol-, Tetrazon- oder Tetramin-Verbindungen und Alkali- oder Erdalkalicarbonate, insbesondere Bioarbonatverbindungen, in Frage. Geeignete physikalische Treibmittel stellen Wasser, Methanol, Ethanol, Dimethyl-ether, Methan, Ethan, i-oder n-Propan, n-Butan, n- oder i-Pentan, Cyclopentan, Hexane, Heptane, Heptene, Benzol und seiner Derivate, Flourchlorkohlenwasserstoffe, Kohlendioxid oder Stickstoff oder dergleichen dar. Die genannten gesättigten und ungesättigten Kohlenwasserstoffe können in jeder isomeren Form eingesetzt werden. Besonders zufriedenstellende Resultate stellen sich bei Verwendung von Wasser, Kohlendioxid und Stickstoff ein.

Insbesondere um eine gute Oberfläche des geschäumten Formkörpers zu erhalten, ist es empfehlenswert, dass Wasser, Kohlendioxid und Stickstoff in superkritischem Zustand eingesetzt werden.

Zu einer makellosen Oberfläche trägt ebenfalls bei, dass das Formwerkzeug, insbesondere bei Verwendung thermoplastischer Ausgangsmaterialien, oder zumindest ein Bereich des Formwerkzeugs oder zumindest ein Bereich der Innenseite des Formwerkzeugs zumindest während eines Abschnitts des Befüllvorgangs mit der Polymerschmelze und/oder zumindest während eines Teils des Abkühlvorgangs der das Formteil bildenden Formmasse eine Temperatur oberhalb der Raumtemperatur, insbesondere oberhalb der Erweichungstemperatur der das Formteil bildenden Formmasse, aufweist, Geeignete Formwerkzeuge, mit denen die Werkzeugwand auf eine hohe Temperatur, z.B. nahe der Schmelztemperatur der Formmasse im Augenblick der Berührung der Schmelze eingestellt werden kann, sind entweder bereits kommerziell erhältlich oder können ohne weiteres auf dem Fachmann bekannte Weise konstruiert werden. Beispielsweise können derartige Werkzeuge Temperierkanäle im Bereich der Werkzeugoberfläche aufweisen, die mit einem Dampfkreislaufsytem verbunden sind.

In einer vorteilhaften Ausgestaltung ist vorgesehen, dass für die Herstellung von Profilen oder Formteilen aus teilkristallin erstarrenden Thermoplasten zumindest ein Teil wenigstens der Oberfläche des Formwerkzeugs eine Temperatur aufweist, die etwa 5°C bis 20°C unterhalb der Erweichungstemperatur oder der Kristallisationstemperatur der das Formteil oder Profil bildenden Formmasse liegt.

Bevorzugt ist ferner, wenn für die Herstellung von Profilen oder Formteilen aus amorph erstarrenden Schmelzen zumindest ein Teil wenigstens der Oberfläche des Formwerkzeugs eine Temperatur aufweist, die etwa 5°C bis 30°C oberhalb der Erweichungstemperatur der das Formteil oder Profil bildenden Formmasse liegt.

Ein vorteilhafter Effekt in Bezug auf die Oberflächeneigenschaften der geschäumten Kunststoffformteile stellt sich ebenfalls ein, wenn zumindest ein Teil, insbesondere wenigstens der Oberfläche, des Formwerkzeugs schlecht wärmeleitend ausgeführt ist. Geeignete schlecht wärmeleitende Materialien stellen Keramik und Kunststoffe dar. Ferner ist es möglich, alternativ oder zusätzlich, die Innenwand des Formwerkzeugs zumindest bereichsweise mit mindestens einer wärmedämmenden Schicht oder Beschichtung, z.B. einer Kunststoff- oder Keramikbeschichtung zu versehen. Geeignete Kunststoffbeschichtungen gehen z.B, zurück auf Polystyrol, auch syndiotaktisches Polystyrol, oder Polytetrafluorethylen (PTFE) oder auf geeignete Kunststoffharze wie Phenol-, Epoxy-, Polyester- oder Siliconharze. Im allgemeinen sind bereits Schichtdicken im Bereich von 0,2 bis 0,8 mm ausreichend, wobei eine Schichtdicke von etwa 0,4 mm sich für viele Anwendungen als ausreichend erwiesen hat.

Selbstverständlich ist es unabhängig von der Qualität der erhaltenen Oberfläche möglich, dass man vor dem Befüllen des Formwerkzeugs mit der Polymerschmelze zumindest auf einen Teil der Oberfläche des Formwerkzeugs eine Folienschicht auflegt. Verfahren zum Hinterschäumen von Folien sowie die für diese Verfahren in Frage kommenden Folien sind dem Fachmann hinlänglich bekannt.

Das erfindungsgemäße Verfahren kann auf handelsüblichen Spritzgießvorrichtungen, Pressanlagen oder Extrudern vorgenommen werden, weshalb die Plastifiziereinheit ein Bestandteil einer solchen Vorrichtung oder eine solche Vorrichtung selber darstellen kann. Geeignete Pressanlagen umfassen z.B, eine Presse sowie das zugehörige Werkzeug.

Eine geeignete Anlagenkombination zur Durchführung des erfindungsgemäßen Verfahrens kann beispielsweise aus einer Spritzgießmaschine bestehen, die mit einem wärmeisolierten und druckfesten Einlasstrichter versehen ist, der wiederum über eine Schleuse mit einem ersten Behältnis in Form eines Autoklaven verbunden ist, in welchem das partikuläre Kunststoffausgangsmaterial mit dem Treibmittel behandelt, insbesondere gesättigt, wird, Das mit dem Treibmittel behandelte Kunststoffausgangsmaterial kann sodann je nach Bedarf über eine Schleuse und den Einlasstrichter der Plastifiziereinheit der Spritzgießmaschine zudosiert werden. Dieses Material wird von der Plastifizierschnecke erfasst und eingezogen.

Eine Granulierung der Polymerschmelze nach dem erfindungsgemäßen Verfahren unter Ausbildung von ungeschäumtem Granulat kann z.B. in der Weise vonstatten gehen, dass in der Plastifiziereinheit oder dem Mischaggregat der Druck derart hoch gehalten wird, dass dem in diese Vorrichtungen eingebrachten Treibmittel nicht die Möglichkeit zu schäumen gegeben wird. Vielmehr verbleibt das Treibmittel gelöst in der Schmelze. In einer geeigneten Ausführungsform kann die Plastifiziereinheit oder das Mischaggregat z.B. in Richtung oder im Bereich des Schmelzeaustrags mindestens eine Kühlstrecke aufweisen, beispielsweise in Form eines Abkühlextruders, so dass bei der Austragung der Schmelze aus dem Werkzeug das Treibmittel in dem erstarrten bzw. erstarrenden un- oder nur angeschäumten Granulat verbleibt. In einer Ausgestaltung kann dieses bereits heruntergekühlte Schmelzematerial z.B. unmittelbar in ein gekühltes Wasserbad unter Ausbildung eines Granulats unter bekannten Bedingungen eingebracht werden. Folglich liegen in diesem ungeschäumten Granulat die Nanopartikel und das Treibmittel nebeneinander vor. Selbstverständlich ist es möglich, die Temperatur- und/oder Druckführung in der vorangehend beschriebenen Verfahrensvariante derart zu führen, dass das Granulat nur geringfügig geschäumt d.h. an- bzw. vorgeschäumt wird und dass noch stets soviel Treibmittel in dem Granulat vorliegt, dass es für die Herstellung geschäumter Formteile oder Profile eingesetzt werden kann. Grundsätzlich ist es ebenfalls möglich, nicht nur ungeschäumte Granulate nach dem erfindungsgemäßen Verfahren herzustellen. Auch können Formteile und Profile im an- bzw. vorgeschäumten Zustand erhalten werden, so dass bei deren erneuter Erwärmung die vollständige Schäumung herbeigeführt werden kann.

Die un- bzw. vorgeschäumten Kunststoffausgangsmaterialien haben zudem den Vorteil, als Masterbatch eingesetzt und vertrieben werden zu können. Über die Beimengung eines Kunststoffausgangsmaterials, das kein Treibmittel enthält, kann im Wege einer gezielten Abmagerung eine gewünschte Porendichte bzw. -verteilung eingestellt werden. Die erfindungsgemäßen Kunststoffausgangsmaterialien lassen sich z.B. vor der Einbringung in eine Plastifiziereinheit oder ein Mischaggregat homogen vermengen.

Mit dem erfindungsgemäßen Verfahren sind geschäumte Kunststoffformteile zugänglich, die sich durch eine sehr gleichmäßige, feinporige Schaumstruktur auszeichnen mit durchschnittlichen Porengrößen kleiner 100 µm, vorzugsweise kleiner 10 µm und besonders bevorzugt kleiner 1 µm. Die Kunststoffkörper verfügen demnach über durchschnittliche Porengrößen, die kleiner sind als die Porengrößen von herkömmlichen aus dem Stand der Technik bekannten geschäumten Körpern. Geeignete Formkörper, Profile oder Granulate verfügen z.B. über durchschnittliche Porengrößen im Bereich von 0,1 bis 10 µm. Die derart erhaltenen Formteile zeigen praktisch keine Schwindung, wodurch es möglich ist, ohne Nachdruck zu arbeiten. Ebenfalls treten Eigenspannungen nicht oder nur noch untergeordnet auf, weshalb ein Bauteilverzug nicht mehr festgestellt wird. Von besonderem Vorteil ist weiterhin, dass die erhaltene Polymerschmelze ein Arbeiten mit größeren bzw. leichteren Schließeinheiten zulässt. Insbesondere zeichnen sich die mit dem

Verfahren erhaltenen Kunststoffformteile jedoch durch eine optisch einwandfreie Oberfläche aus, die z.B., ohne dass weitere Korrekturschritte erforderlich sind, bereits ausreicht, um Sichtanwendungen im Automobilbau zuzulassen. Von besonderem Vorteil ist weiterhin das sehr hohe Maß an Schall- und Erschütterungsdämpfung, das sich mit den Kunststoffkörpern erzielen lässt.

## Patentansprüche

1. Verfahren zur Herstellung eines geschäumten Formteils, Profils oder Granulats unter Verwendung polymerer Werkstoffe, umfassend:
a) Zurverfügungstellen von polymerem Ausgangsmaterial, wobei das polymere Ausgangsmaterial ein thermoplastisches Polymer und/oder ein thermoplastisches Elastomer umfasst, und von Nanopartikeln mit einem chemischen Treibmittel präpariert;
b) gleichzeitiges oder sequentielles Vermengen des polymeren Ausgangsmaterials und der mit einem Treibmittel präparierten Nanopartikel in mindestens einem ersten Behältnis;
c) Einführen der Mischung aus polymerem Ausgangsmaterial und mit einem Treibmittel präparierten Nanopartikeln aus dem mindestens einen ersten Behältnis in eine Plastifiziereinheit oder ein Mischaggregat zur Herstellung einer zumindest partiellen Polymerschmelze;
d) Austragen der Polymerschmelze in mindestens ein Form- oder Strangwerkzeug unter Ausbildung eines geschäumten Formteils oder Profils und Entnahme oder Abzug des Formteils oder des Profils aus dem Form- oder Strangwerkzeug;
oder Granulierung der Polymerschmelze unter Ausbildung von geschäumten Granulat.

2. Verfahren nach Anspruch 1, **dadurch gekennzeichnet, dass**
ein Teil der mit einem Treibmittel präparierten Nanopartikel mit einem Teil des polymeren Ausgangsmaterials in dem mindestens einen ersten Behältnis vermengt werden und dass die erhaltene Mischung vor der Einführung in die Plastifiziereinheit oder das Mischaggregat mit einem Treibmittel bis zur Sättigung oder Teilsättigung mit diesem vermengt und/oder in diesem gelagert wird.

3. Verfahren nach Anspruch 2, **dadurch gekennzeichnet, dass** der restliche Teil der mit einem Treibmittel präparierten Nanopartikel und/oder der restliche Teil des polymeren Ausgangsmaterials mit der Mischung aus polymerem Ausgangsmaterial, der mit einem Treibmittel präparierten Nanopartikel und dem Treibmittel in dem ersten Behältnis vermengt wird bzw. werden.

4. Verfahren nach einem der vorangehenden Ansprüche, **dadurch gekennzeichnet, dass** das polymere Ausgangsmaterial oder ein Teil davon und/oder die mit einem Treibmittel präparierten Nanopartikel in dem Treibmittel bei einem Druck und einer Temperatur gelagert wird bzw. werden, insbesondere solange, bis das polymere Ausgangsmaterial und/oder die mit einem Treibmittel präparierten Nanopartikel nahezu oder im wesentlichen vollständig mit dem Treibmittel gesättigt sind oder einen vorgegebenen Sättigungsgrad erreicht haben.

5. Verfahren nach Anspruch 4, **dadurch gekennzeichnet, dass**
die Nanopartikel vor der Vermengung mit dem polymeren Ausgangsmaterial oder eines Teils davon in dem Treibmittel gelagert werden.

6. Verfahren nach einem der vorangehenden Ansprüche, **dadurch gekennzeichnet, dass** das polymere Ausgangsmaterial und/oder die Nanopartikel vor der Einführung in die Plastifiziereinheit oder das Mischaggregat, insbesondere in dem ersten Behältnis, einem erhöhten Druck und/oder einer erhöhten Temperatur ausgesetzt werden.

7. Verfahren nach einem der vorangehenden Ansprüche, **dadurch gekennzeichnet, dass** das thermoplastische Polymer, ausgewählt wird aus der Gruppe, bestehend aus Polyolefmen, ASA-Polymerisaten, ABS-Polymerisaten, Polycarbonaten, Polyestern, Polyamiden, Polyethem, Polyimiden, Polyetherketonen, Polystyrolen, Polyurethanen, Polyphenylensulfiden, Polyphenylenethern, Poly(meth)acrylaten, Poly(meth)acrylamiden, Poly(meth)acrylnitril, Polysulfonen, Polyvinylchloriden, SAN-Polymerisaten, Epoxyharzen, Phenolharzen, jeweils in schlagzähmodifizierter und nicht schlagzähmodifizierter Form, sowie deren Mischungen.

8. Verfahren nach einem der vorangehenden Ansprüche, **dadurch gekennzeichnet, dass** das thermoplastische Elastomer ausgewählt wird aus der Gruppe bestehend aus S-EB-S-, SBS-, SIS-, EPDMIPP-, Polyamid-, Polyester-, TPU-Systemen, sowie deren Mischungen.

9. Verfahren nach einem der vorangehenden Ansprüche, **dadurch gekennzeichnet, dass** als Nanopartikel Schichtsilikate, insbesondere Montmorillonit, Smectit, Ellit, Sepiolit, Palygorskit, Muscovit, Allivardit, Amesit, Hectorit, Fluorhectorit, Saponit, Beidellit, Talkum, Nontronit, Stevensit, Ben-tonit, Glimmer, Vermiculit, Fluorvermiculit, Halloysit und fluorenthaltende synthetische Talkum-Typen sowie deren Mischungen, und/oder mindestens eine für das Sol/Gelverfahren geeignete Siliziumverbindung, insbesondere pyrogene Kieselsäure, und/oder auf der Basis von Kohlenstoff erzeugte Ruße, und/oder Nanoröhrchen oder -pulver, eingesetzt werden.

10. Verfahren nach einem der vorangehenden Ansprüche, **dadurch gekennzeichnet, dass** die durchschnittliche Länge und/oder Breite der eingesetzten Nanopartikel im Bereich von 20 bis 500 nm und/oder die durchschnittliche Dicke und/oder der Radius dieser Nanopartikel im Bereich von 1 bis 250 nm liegt.

11. Verfahren nach einem der vorangehenden Ansprüche, **dadurch gekennzeichnet, dass** das chemische Treibmittel ausgewählt wird aus der Gruppe, bestehend aus Azo- oder Diazoverbindungen, insbesondere Azodicarbonsäurediamid, Sulfohydraziden, Semicarbaziden, Zitronensäure und deren Estern, Peroxo-, Triazin-Tetrazol-, Tetrazon- oder Tetramin-Verbindungen und Alkali- oder Erdalkalicarbonaten, insbesondere Bicarbonatverbindungen.

12. Verfahren nach einem der vorangehenden Ansprüche, **dadurch gekennzeichnet, dass**, insbesondere bei Verwendung thermoplastischer Ausgangsmaterialien, zumindest ein Bereich des Formwerkzeugs oder zumindest ein Bereich der Innenseite des Formwerkzeugs zumindest während eines Abschnitts des Befüllvorgangs mit der Polymerschmelze und/oder zumindest während eines Teils des Abkühlvorgangs der das Formteil bildenden Formmasse eine Temperatur oberhalb der Raumtemperatur, insbesondere oberhalb der Erweichungstemperatur der das Formteil bildenden Formmasse, aufweist.

13. Verfahren nach einem der vorangehenden Ansprüche, **dadurch gekennzeichnet, dass**, insbesondere für die Herstellung von Profilen oder Formteilen aus teilkristallin erstarrenden Thermoplasten, zumindest ein Teil wenigstens der Oberfläche des Formwerkzeugs eine Temperatur aufweist, die etwa 5°C bis 20°C unterhalb der Erweichungstemperatur oder der Kristallisationstemperatur der das Formteil oder Profil bildenden Formmasse liegt.

14. Verfahren nach einem der vorangehenden Ansprüche, **dadurch gekennzeichnet, dass** für die Herstellung von Profilen oder Formteilen aus amorph erstarrenden Schmelzen zumindest ein Teil wenigstens der Oberfläche des Formwerkzeugs eine Temperatur aufweist, die etwa 5°C bis 30°C oberhalb der Erweichungstemperatur der das Formteil oder Profil bildenden Formmasse liegt.

15. Verfahren nach einem der vorangehenden Ansprüche, **dadurch gekennzeichnet, dass** zumindest ein Teil, insbesondere der Oberfläche, des Formwerkzeugs schlecht wärmeleitend ausgeführt ist, insbesondere Stahl, hochlegierte Stähle und/oder Titan umfasst und/oder mit einer Keramik- und/oder Kunststoffbeschichtung versehen ist.

16. Verfahren nach einem der vorangehenden Ansprüche, **dadurch gekennzeichnet, dass** vor dem Befüllen des Formwerkzeugs mit der Polymerschmelze zumindest auf einen Teil der Oberfläche des Formwerkzeugs mindestens eine Folienschicht aufgelegt wird.

17. Verfahren nach einem der vorangehenden Ansprüche, **dadurch gekennzeichnet, dass** die Plastifiziereinheit Bestandteil einer Spritzgießvorrichtung, einer Pressanlage oder eines Extruders ist oder ein Spritzgießwerkzeug, eine Pressanlage oder einen Extruder darstellt.

18. Verfahren nach einem der vorangehenden Ansprüche, **dadurch gekennzeichnet, dass** das Formwerkzeug- oder die Pressanlage vor der Füllung mit der Polymerschmelze mit einem Gas unter erhöhtem Druck gefüllt wird.

## Claims

1. A method for producing a foamed molded part, pro-file or granulated material using polymeric materials, comprising:
a) providing a polymeric source material, where-in the polymeric source material comprises a thermoplastic polymer and/or a thermoplastic elastomer, and providing nanoparticles that are prepared with a chemical blowing agent;
b) simultaneous or sequential mixing of the polymeric source material and the nanoparticles prepared with a blowing agent in at least one first receptacle;
c) feeding the mixture of the polymeric source material and the nanoparticles prepared with a blowing agent from the at least one first receptacle into a plastifying unit or a mixing aggregate for producing an at least partial polymer melt;
d) discharging the polymer melt into at least one molding or extrusion die forming a foamed molding or profile, and removing or withdrawing the molding or profile from the molding or extrusion die; or granulating the polymer melt forming a foamed granulated material.

2. The method according to claim 1, **characterized in that** a part of the nanoparticles prepared with a blowing agent is mixed with a part of the polymeric source material in the at least one first receptacle and that the obtained mixture, before it is fed into the plastifying unit or the mixing aggregate, is mixed with a blowing agent and/or stored in said blowing agent until it is saturated or partially saturated with said blowing agent.

3. The method according to claim 2, **characterized in that** the remaining part of the nanoparticles prepared with a blowing agent and/or the remaining part of the polymeric source material are/is mixed with the mixture of the polymeric source material, the nanoparticles prepared with a blowing agent and the blowing agent in the first receptacle.

4. The method according to any one of the preceding claims, **characterized in that** the polymeric source material or a part thereof and/or the nanoparticles prepared with a blowing agent are/is stored in the blowing agent at a pressure and a temperature, particularly until the polymeric source material and/or the nanoparticles prepared with a blowing agent are almost or essentially completely saturated with the blowing agent or have reached a predetermined degree of saturation.

5. The method according to claim 4, **characterized in that** the nanoparticles are stored in the blowing agent before they are mixed with the polymeric source material or a part thereof.

6. The method according to any one of the preceding claims, **characterized in that** the polymeric source material and the nanoparticles are subjected to an increased pressure and/or to an increased temperature, particularly in the first receptacle, before they are fed into the plastifying unit or the mixing aggregate.

7. The method according to any one of the preceding claims, **characterized in that** the thermoplastic polymer is selected from the group consisting of polyolefins, ASA polymers, ABS polymers, polycarbonates, polyesters, polyamides, polyethers, polyimides, polyetherketones, polystyrenes, poly-urethanes, polyphenylene sulfides, polyphenyleneethers, poly(meth)acrylates, poly(meth)acrylamides, poly(meth)acrylonitrile, polysulfones, polyvinyl chlorides, SAN polymers, epoxy resins, phenolic resins, each of them in impact-resistant modified and non-impact-resistant modified form, as well as of mixtures thereof.

8. The method according to any one of the preceding claims, **characterized in that** the thermoplastic elastomer is selected from the group consisting of S-EB-S systems, SBS systems, SIS systems, EP-DM/iPP systems, polyamide systems, polyester systems, TPU systems, as well as of mixtures thereof.

9. The method according to any one of the preceding claims, **characterized in that** phyllosilicates, particularly montmorillonite, smectite, ellite, sepiolite,palygorskite, muscovite, allivardite, amesite, hectorite, fluorohectorite, saponite, beidellite, talcum, nontronite, stevensite, bentonite, mica, vermiculite, fluorovermiculite, halloysite and fluoric synthetic talcum types as well as mixtures thereof, and/or at least one silicon compound that is suitable for the sol-gel process, particularly pyrogenic silicic acid, and/or soots produced on the basis of carbon, and/or nanotubes or nanopowders are used as nanoparticles.

10. The method according to any one of the preceding claims, **characterized in that** the average length and/or width of the used nanoparticles is in the range from 20 to 500 nm and/or the average thickness and/or the radius of these nanoparticles is in the range from 1 to 250 nm.

11. The method according to any one of the preceding claims, **characterized in that** the chemical blowing agent is selected from the group consisting of azocompounds or diazo compounds, particularly azodicarboxylic acid diamide, sulphohydrazides, semicarbazides, citric acid and its esters, peroxo compounds, triazinetetrazole compounds, tetrazonecompounds or tetramine compounds and alkali carbonates or alkaline earth carbonates, particularly bi-carbonate compounds.

12. The method according to any one of the preceding claims, **characterized in that** particularly when using thermoplastic source materials, the temperature of at least a part of the molding die or of at least a part of the inner surface of the molding die is above room temperature, particularly above the glass transition temperature of the molding material that forms the molding, at least during a part of the process of filling the molding die with the polymer melt and/or at least during a part of the cooling-down process of the molding material that forms the molding.

13. The method according to any one of the preceding claims, **characterized in that** particularly for the production of profiles or moldings from thermoplastics solidifying in such a manner that they become partially crystallized, the temperature of at least a part of at least the surface of the molding die is approximately 5 °C to 20 °C below the glass transition temperature or the crystallization temperature of the molding material that forms the molding or profile.

14. The method according to any one of the preceding claims, **characterized in that** for the production of profiles or moldings from molten materials solidifying in such a manner that they become amorphous, the temperature of at least a part of at least the surface of the molding die is approximately 5 °C to 30 °C above the glass transition temperature of the molding material that forms the molding or profile.

15. The method according to any one of the preceding claims, **characterized in that** at least a part, particularly of the surface, of the molding die is a poor heat conductor, comprises particularly steel, high-alloy steels and/or titanium, and/or is provided with a ceramic and/or plastic coating.

16. The method according to any one of the preceding claims, **characterized in that** at least one layer of film is placed on at least a part of the surface of the molding die before the molding die is filled with the polymer melt.

17. The method according to any one of the preceding claims, **characterized in that** the plastifying unit is a part of an injection molding device, of a molding press or of an extruder or is an injection mold, a molding press or an extruder.

18. The method according to any one of the preceding claims, **characterized in that** the molding die or the molding press is filled with a gas under elevated pressure before it is filled with the polymer melt.

## Revendications

1. Procédé de fabrication de pièces moulées, de profilés ou de granulats en mousse, en utilisant des matériaux polymères, comportant les étapes consistant à:
a) fournir une matière première polymère, de sorte que la matière première polymère comporte un polymère thermoplastique et/ou un élastomère thermoplastique, et des nanoparticules préparées avec un agent d'expansion chimique;
b) incorporer en même temps ou séquentiellement les matières premières polymères et les nanoparticules préparées avec un agent d'expansion dans au moins un premier récipient;
c) introduire le mélange de matières premières polymères et de nanoparticules préparées avec un agent d'expansion dans une unité de plastification ou une unité de mélange à partir du au moins un premier récipient, pour fabriquer un polymère au moins partiellement fondu;
d) évacuer le polymère fondu dans au moins un moule de moulage par injection ou de coulée sous pression pour former une pièce moulée ou un profilé en mousse, puis retirer ou extraire la pièce moulée ou le profilé du moule de moulage par injection ou de coulée sous pression ;ou mettre en granules le polymère fondu pour former un granulat de mousse.

2. Procédé selon la revendication 1, **caractérisé en ce qu'**une partie des nanoparticules préparées avec un agent d'expansion va être incorporée dans une partie des matières premières polymères dans le au moins un premier récipient, et **en ce que** le mélange obtenu va être incorporé et/ou stocké dans un agent d'expansion avant d'être alimenté dans l'unité de plastification ou l'unité de mélange, jusqu'à une saturation ou une saturation partielle avec celui-ci.

3. Procédé selon la revendication 2, **caractérisé en ce que** le reste des nanoparticules préparées avec un agent d'expansion et/ou le reste des matières premières polymères, va être ou vont être incorporé avec le mélange constitué de la matière première polymère, des nanoparticules préparées avec un agent d'expansion et de l'agent d'expansion, dans le premier récipient.

4. Procédé selon l'une quelconque des revendications précédentes, **caractérisé en ce que** la matière première polymère, ou une partie de celle-ci, et/ou les nanoparticules préparées à l'aide d'un agent d'expansion va être ou vont être stockées dans l'agent d'expansion à une pression et à une température, en particulier jusqu'à ce que la matière première polymère et/ou les nanoparticules préparées avec un agent d'expansion soient quasiment ou essentiellement saturées avec l'agent d'expansion, ou aient atteint un degré de saturation spécifique.

5. Procédé selon la revendication 4, **caractérisé en ce que** les nano particules, avant le mélange avec la matière première polymère ou une partie de celle-ci, vont être stockées dans l'agent d'expansion.

6. Procédé selon l'une quelconque des revendications précédentes, **caractérisé en ce que** la matière première polymère et/ou les nanoparticules sont soumises à une pression élevée et/ou à une température élevée avant d'être introduites dans l'unité de plastification ou l'unité de mélange, en particulier dans le premier récipient.

7. Procédé selon l'une quelconque des revendications précédentes, **caractérisé en ce que** la matière première polymère va être choisie dans le groupe comprenant des polyoléfines, des polymères ASA, des polymères ABS, des polycarbonates, des polyesters, des polyamides, des polyéthers, des polyimides, des polyéthercétones, des polystyrènes, despolyuréthanes, du sulfure de polyphénylène, deséthers de polyphénylène, des polyméthacrylates, des polyméthacrylamides, des polyméthacrylnitriles, des polysulfones, des chlorures de polyvinyle, des polymères SAN, des résines époxydes, des résines phénoliques, sous une forme modifiée ou non modifiée pour résister aux impacts, et des mélanges de ceux-ci

8. Procédé selon l'une quelconque des revendications précédentes, **caractérisé en ce que** l'élastomère thermoplastique va être choisi dans le groupe comprenant des systèmes S-EB-S, SBS, SIS, EPD-MIPP, de polyamide, de polyester et TPU, et des mélanges de ceux-ci.

9. Procédé selon l'une quelconque des revendications précédentes, **caractérisé en ce qu'**en tant que nanoparticules, des phyllosilicates sont utilisés, en particulier montmorillonite, smectite, illite, sépiolite, palygorskite, muscovite, allivardite, amésite, héctorite, fluorhéctorite, saponite, beidellite, talc, nontronite, stévensite, bentonite, mica, vermiculite, fluorvermiculite, halloysite et des types de talc synthétique contenant du fluor, et des mélanges de ceux-ci, et/ou au moins un composé de silicium adapté pour un processus sol-gel, en particulier de l'acide silicique pyrogénique, et/ou des suies à base de carbone, et/ou des nanotubes ou des poudres.

10. Procédé selon l'une quelconque des revendications précédentes, **caractérisé en ce que** la longueur et/ou largeur moyenne des nanoparticules utilisées est dans une plage de 20 à 500 nm, et/ou l'épaisseur moyenne et/ou le rayon de ces particules est dans une plage de 1 à 250 nm.

11. Procédé selon l'une quelconque des revendications précédentes, **caractérisé en ce que** l'agent d'expansion chimique est sélectionné dans le groupe comprenant des composés azo et diazo, en particulier diamide d'acide azodicarboxylique, des sulfohydrazides, des semicarbazides, de l'acide citrique et ses esters, des composés péroxo, de triazine, de tétrazole, de tétrazone ou de tétramine, et des carbonates alcalins ou alcalino-terreux, en particulier des composés de bicarbonate.

12. Procédé selon l'une quelconque des revendications précédentes, **caractérisé en ce qu'**en particulier par l'utilisation de matières premières thermoplastiques, au moins une zone du moule, ou au moins une zone de l'intérieur du moule, au moins pendant une partie d'un processus de remplissage du moule avec le matériau polymère fondu et/ou au moins pendant une partie d'un processus de refroidissement du matériau moulé qui forme la pièce moulée, est à une température qui est au-dessus de la température ambiante, en particulier au-dessus de la température de ramollissement du matériau moulé qui forme la pièce moulée.

13. Procédé selon l'une quelconque des revendications précédentes, **caractérisé en ce que** pour la production de profilés ou de pièces moulées à partir de matériaux thermoplastiques solidifiés partiellement cristallisés, au moins une partie d'au moins la surface supérieure du moule est à une température qui est approximativement dans la plage de 5°C à 20°C ou la température de ramollissement ou la température de cristallisation du matériau moulé qui forme la pièce moulée ou le profilé.

14. Procédé selon l'une quelconque des revendications précédentes, **caractérisé en ce que** pour la production de profilés ou de pièces moulées à partir d'un matériau fondu solidifié amorphe, au moins une partie d'au moins la surface supérieure du moule est à une température qui est approximativement dans la plage de 5°C à 30°C au-dessus de la température de ramollissement du matériau moulé qui forme la pièce moulée ou le profilé.

15. Procédé selon l'une quelconque des revendications précédentes, **caractérisé en ce qu'**au moins une partie du moule, en particulier la surface supérieure, est un faible conducteur de chaleur, comporte des aciers fortement alliés, en particulier de l'acier, et/ou du titane, et est munie d'un revêtement de céramique et/ou de matière plastique.

16. Procédé selon l'une quelconque des revendications précédentes, **caractérisé en ce qu'**avant le remplissage du moule avec le matériau polymère fondu, une couche de film est placée sur au moins une partie de la surface supérieure du moule.

17. Procédé selon l'une quelconque des revendications précédentes, **caractérisé en ce que** l'unité de plastification est un composant d'un dispositif de moulage par injection, d'un système de presse ou d'une extrudeuse, ou est un outil de moulage par injection, un système de presse ou une extrudeuse.

18. Procédé selon l'une quelconque des revendications précédentes, **caractérisé en ce que** le moule ou le système de presse est rempli d'un gaz sous une pression élevée avant d'être rempli du matériau fondu polymère.
